# EUROPEAN PATENT APPLICATION

(11) **EP 4 600 610 A1**
(43) Date of publication of application: **13.08.2025**
(21) Application number: 23884499.7
(22) Date of filing: 21.09.2023
(51) Int. Cl.: G01C 21/34

(54) **NAVIGATION METHOD, NAVIGATION APPARATUS, NAVIGATION SYSTEM, AND VEHICLE**

(30) Priority: 31.10.2022 CN 202211350394
(71) Applicant: Shenzhen Yinwang Intelligent Technologies Co., Ltd., Shenzhen, Guangdong 518129 (CN)
(72) Inventor: JIANG, Xinyan, Shenzhen, Guangdong 518129 (CN); XIA, Pei, Shenzhen, Guangdong 518129 (CN); ZHOU, Jin, Shenzhen, Guangdong 518129 (CN)
(74) Representative: Maiwald GmbH
(86) International application number: PCT/CN2023/120420
(87) International publication number: WO 2024/093567

(57) **Abstract**

A navigation method, a navigation apparatus, a navigation system, a computer-readable storage medium, and a vehicle are provided. The navigation method includes: obtaining navigation information of a vehicle (S410); displaying a first navigation identifier in front of the vehicle through a first apparatus (S420); and displaying a second navigation identifier in front of the vehicle through a second apparatus (S430). The first navigation identifier and the second navigation identifier are used to jointly display the navigation information. According to the method, multi-dimensional navigation information can be provided for a driver, so that navigation flexibility and a navigation effect can be improved, and navigation experience can be improved.

## Description

This application claims priority to Chinese Patent Application No. 202211350394.4, filed with the China National Intellectual Property Administration on October 31, 2022 and entitled "NAVIGATION METHOD, NAVIGATION APPARATUS, NAVIGATION SYSTEM, AND VEHICLE", which is incorporated herein by reference in its entirety.

### TECHNICAL FIELD

Embodiments of this application relate to the field of intelligent vehicle technologies, and more specifically, to a navigation method, a navigation apparatus, a navigation system, and a vehicle.

### BACKGROUND

A vehicle navigation system may perform route planning based on a start location and a destination that are set by a driver, mark a driving route of a vehicle on an electronic map by using an arrow, a line, or another shape in a driving process of the vehicle, and then display the driving route through the vehicle, to provide a real-time route prompt and real-time route guidance for the driver. This is of great significance to reliable running of the vehicle.

### SUMMARY

Embodiments of this application provide a navigation method, a navigation apparatus, a navigation system, and a vehicle, to improve vehicle navigation experience.

According to a first aspect, a navigation method is provided. The method includes: obtaining navigation information of a vehicle; displaying a first navigation identifier in front of the vehicle through a first apparatus; and displaying a second navigation identifier in front of the vehicle through a second apparatus. The first navigation identifier and the second navigation identifier are used to jointly display the navigation information.

The navigation information may be route guide information. Based on the navigation information, a driver may learn in advance information such as a direction in which the vehicle should travel, a lane in which the vehicle should travel, a restricted area of the vehicle, and whether to turn left, turn right, go straight, or make a U-turn at a next intersection.

The first apparatus and the second apparatus may be apparatuses disposed on the vehicle, may be front-mounted apparatuses or rear-mounted apparatuses, or may be outer-mounted apparatuses or inner-mounted apparatuses, for example, head up display (head up display, HUD) apparatuses, vehicle-mounted displays, or vehicle lights (for example, headlights). Alternatively, one or both of the first apparatus and the second apparatus may be an apparatus/apparatuses that establishes/establish a connection to a vehicle-mounted processing apparatus (for example, a head unit), for example, a mobile phone or a tablet computer. In embodiments of this application, "front of the vehicle" may mean "front of a vehicle head", "part that is close to the vehicle head in a cabin", "front ground area of the vehicle", or "front non-ground area of the vehicle".

For example, the first navigation identifier may be displayed in the front non-ground area of the vehicle through the first apparatus, and the second navigation identifier may be displayed in the front ground area of the vehicle through the second apparatus (for example, a right-turn guide arrow is displayed in the front non-ground area of the vehicle through the first apparatus, and a right-turn guide area is displayed in the front ground area of the vehicle through the second apparatus), to provide multi-dimensional navigation information for the driver, improve navigation flexibility and a navigation effect, and improve navigation experience.

For example, the first navigation identifier may be displayed in the front non-ground area of the vehicle through the first apparatus, and the second navigation identifier may be displayed in the front non-ground area of the vehicle through the second apparatus (for example, a right-turn guide arrow is displayed in the front non-ground area of the vehicle through the first apparatus, and a projection of the right-turn guide arrow is displayed in the front non-ground area of the vehicle through the second apparatus, so that the right-turn guide arrow presents a three-dimensional effect from an overall perspective), to provide more navigation information for the driver, improve navigation flexibility and a navigation effect, and improve navigation experience.

For example, the first navigation identifier may be displayed in the front ground area of the vehicle through the first apparatus, and the second navigation identifier may be displayed in the front non-ground area of the vehicle through the second apparatus (for example, a right-turn guide arrow is displayed in the front ground area of the vehicle through the first apparatus, and the right-turn guide arrow is also displayed in the front non-ground area of the vehicle through the second apparatus), to provide multi-dimensional navigation information for the driver, improve navigation flexibility and a navigation effect, and improve navigation experience.

For example, the first navigation identifier may be displayed in the front ground area of the vehicle through the first apparatus, and the second navigation identifier may be displayed in the front ground area of the vehicle through the second apparatus (for example, a right-turn guide arrow is displayed in the front ground area of the vehicle through the first apparatus, and a right-turn guide area is displayed in the front ground area of the vehicle through the second apparatus), to provide more navigation information for the driver, improve navigation flexibility and a navigation effect, and improve navigation experience.

In this embodiment of this application, the first navigation identifier is displayed in front of the vehicle through the first apparatus, for example, the first navigation identifier is displayed in the front non-ground area of the vehicle through the first apparatus (specifically, for example, through the first apparatus, a virtual image is formed on a front windshield and the first navigation identifier is displayed); and the second navigation identifier is displayed in front of the vehicle through the second apparatus, for example, the second navigation identifier is displayed on the ground in front of the vehicle through the second apparatus, where the first navigation identifier and the second navigation identifier can jointly display the navigation information. Compared with a manner of displaying navigation information by a single apparatus, this displays the navigation information more clearly and more flexibly, to provide multi-dimensional navigation information for the driver, thereby improving navigation flexibility and a navigation effect, and improving navigation experience.

For example, the first apparatus performs projection on the front windshield of the vehicle, and forms a virtual image of the first navigation identifier. Generally, the virtual image is essentially on a two-dimensional plane, and is not a real three-dimensional effect. In this embodiment of this application, the first navigation identifier is displayed on the front non-ground of the vehicle through the first apparatus, and the second navigation identifier is displayed on the ground in front of the vehicle through the second apparatus, to jointly display the navigation information. Compared with a manner of displaying a navigation identifier only through the first apparatus, this can make the driver better determine a location and an indication meaning of the navigation identifier, and can implement a better display effect and more flexibility through combination of the first navigation identifier and the second navigation identifier, so that the driver can easily determine a navigation route, and navigation experience is improved.

With reference to the first aspect, in some implementations of the first aspect, the method further includes: when a preset condition is met, displaying the second navigation identifier in front of the vehicle through the first apparatus.

Optionally, the preset condition may include: An effect of the second navigation identifier displayed through the second apparatus does not reach a preset effect, or the second navigation identifier cannot be displayed in front of the vehicle through the second apparatus.

It should be understood that, when the driver cannot clearly and accurately determine a location and an indication meaning of the second navigation identifier displayed through the second apparatus, it may be considered that the effect of the second navigation identifier displayed through the second apparatus does not reach the preset effect. Specifically, whether the driver can clearly and accurately determine the location and the indication meaning of the identifier may be analyzed based on information such as contour clarity and brightness of the second navigation identifier displayed through the second apparatus.

"Displaying the second navigation identifier on the ground in front of the vehicle through the second apparatus" is used as an example. When ambient luminance is greater than or equal to operating luminance of the second apparatus, a to-be-displayed ground area of the second navigation identifier is shielded, a to-be-displayed ground area of the second navigation identifier exceeds a ground display area of the second apparatus, or the like, it may be considered that the second navigation identifier cannot be displayed in front of the vehicle through the second apparatus. A vehicle light is used as an example. The operating luminance of the second apparatus may be understood as projection luminance of a projection unit of the second apparatus, and the ground display area of the second apparatus may be understood as a ground projection area of the second apparatus.

In embodiments of this application, when the preset condition is met, the second navigation identifier may be displayed in front of the vehicle through the first apparatus, so that a display effect of the navigation information can still be ensured when the second navigation identifier cannot be displayed in front of the vehicle through the second apparatus or an effect of the second navigation identifier displayed through the second apparatus is poor.

With reference to the first aspect, in some implementations of the first aspect, the method further includes: when a first distance between a shield in front of the vehicle and the second apparatus is less than a second distance between the to-be-displayed ground area of the second navigation identifier and the second apparatus, determining that the to-be-displayed ground area of the second navigation identifier is shielded.

With reference to the first aspect, in some implementations of the first aspect, the first navigation identifier and the second navigation identifier are displayed synchronously.

In embodiments of this application, the first navigation identifier and the second navigation identifier may be displayed synchronously, to ensure a display effect of the navigation information and improve navigation experience.

With reference to the first aspect, in some implementations of the first aspect, the navigation information that is jointly displayed by using the first navigation identifier and the second navigation identifier is presented in a three-dimensional effect.

In embodiments of this application, the navigation information that is jointly displayed by using the first navigation identifier and the second navigation identifier may be presented in the three-dimensional effect, to enhance integration of the navigation information and a real environment, so that a navigation route can be seen more intuitively from a perspective of the driver, safety is improved, and navigation experience and navigation efficiency are improved.

With reference to the first aspect, in some implementations of the first aspect, the first navigation identifier includes a first route guide identifier, and the second navigation identifier includes a ground projection identifier corresponding to the first route guide identifier. Specifically, the first route guide identifier and the ground projection identifier jointly present a three-dimensional effect.

In embodiments of this application, in addition to displaying the first route guide identifier in front of the vehicle through the first apparatus, the ground projection identifier corresponding to the first route guide identifier is displayed in front of the vehicle through the second apparatus, so that the driver can see the first route guide identifier presenting the three-dimensional effect. This can enhance integration of the first route guide identifier and the real ground, so that a route guided by the first route guide identifier can be seen more intuitively from the perspective of the driver, to improve safety and improve navigation experience and navigation efficiency.

With reference to the first aspect, in some implementations of the first aspect, the first navigation identifier includes a second route guide identifier, and the second navigation identifier includes a third route guide identifier.

For example, the second route guide identifier may include a route guide arrow, and the third route guide identifier may include a route guide area.

For example, the second route guide identifier may include a first part of a target route guide identifier, and the third route guide identifier may include a second part of the target route guide identifier.

In embodiments of this application, in addition to displaying the second route guide identifier in front of the vehicle through the first apparatus, the third route guide identifier is displayed in front of the vehicle through the second apparatus, to jointly guide a route based on the second route guide identifier and the third route guide identifier, so that the route guided by route guide identifiers can be seen more intuitively from the perspective of the driver, to improve safety and improve navigation experience and navigation efficiency.

With reference to the first aspect, in some implementations of the first aspect, the first apparatus includes a head up display HUD apparatus, and the second apparatus includes a vehicle light. The vehicle light includes a plurality of independently controllable projection units, and the plurality of independently controllable projection units are configured to control a projection direction, so that the second navigation identifier is displayed on the ground in front of the vehicle.

This means that in a possible embodiment of this application, when the first navigation identifier is displayed in the front non-ground area of the vehicle through the HUD apparatus, the second navigation identifier may be displayed on the ground in front of the vehicle through the vehicle light, to jointly display the navigation information. Compared with a conventional manner in which navigation information is displayed only through the HUD apparatus, this can improve a display effect of the navigation information, so that the driver can better determine a location and an indication meaning of the navigation identifier, and more easily determine a navigation route, to improve navigation experience.

With reference to the first aspect, in some implementations of the first aspect, the vehicle light includes a digital projection light, and the projection unit is a micro reflector; or the vehicle light includes a light emitting diode (light emitting diode, LED) light, and the projection unit is an LED bead.

According to a second aspect, a navigation apparatus is provided, including: an obtaining module, configured to obtain navigation information of a vehicle; and a processing module, configured to display a first navigation identifier in front of the vehicle through a first apparatus, and further configured to display a second navigation identifier in front of the vehicle through a second apparatus. The first navigation identifier and the second navigation identifier are used to jointly display the navigation information.

With reference to the second aspect, in some implementations of the second aspect, the processing module is further configured to: when a preset condition is met, display the second navigation identifier in front of the vehicle through the first apparatus.

Optionally, the preset condition may include: An effect of the second navigation identifier displayed through the second apparatus does not reach a preset effect, or the second navigation identifier cannot be displayed in front of the vehicle through the second apparatus.

"Displaying the second navigation identifier on the ground in front of the vehicle through the second apparatus" is used as an example. When ambient luminance is greater than or equal to operating luminance of the second apparatus, a to-be-displayed ground area of the second navigation identifier is shielded, a to-be-displayed ground area of the second navigation identifier exceeds a ground display area of the second apparatus, or the like, it may be considered that the second navigation identifier cannot be displayed in front of the vehicle through the second apparatus. A vehicle light is used as an example. The operating luminance of the second apparatus may be understood as projection luminance of a projection unit of the second apparatus, and the ground display area of the second apparatus may be understood as a ground projection area of the second apparatus.

With reference to the second aspect, in some implementations of the second aspect, the processing module is further configured to: when a first distance between a shield in front of the vehicle and the second apparatus is less than a second distance between the to-be-displayed ground area of the second navigation identifier and the second apparatus, determine that the to-be-displayed ground area of the second navigation identifier is shielded.

With reference to the second aspect, in some implementations of the second aspect, the navigation information that is jointly displayed by using the first navigation identifier and the second navigation identifier is presented in a three-dimensional effect.

With reference to the second aspect, in some implementations of the second aspect, the first navigation identifier includes a first route guide identifier, and the second navigation identifier includes a ground projection identifier corresponding to the first route guide identifier.

With reference to the second aspect, in some implementations of the second aspect, the first navigation identifier includes a second route guide identifier, and the second navigation identifier includes a third route guide identifier.

For example, the second route guide identifier may include a route guide arrow, and the third route guide identifier may include a route guide area.

For example, the second route guide identifier may include a first part of a target route guide identifier, and the third route guide identifier may include a second part of the target route guide identifier.

With reference to the second aspect, in some implementations of the second aspect, the first apparatus includes an HUD apparatus, and the second apparatus includes a vehicle light. The vehicle light includes a plurality of independently controllable projection units, and the plurality of independently controllable projection units are configured to control a projection direction, so that the second navigation identifier is displayed on the ground in front of the vehicle.

With reference to the second aspect, in some implementations of the second aspect, the vehicle light includes a digital projection light, and the projection unit is a micro reflector; or the vehicle light includes an LED light, and the projection unit is an LED bead.

According to a third aspect, a navigation apparatus is provided, including at least one processor. The at least one processor is configured to: be coupled to a memory, and read and execute instructions in the memory, to implement the navigation method according to any one of the first aspect or the possible implementations of the first aspect.

According to a fourth aspect, a vehicle is provided, including a module configured to perform the navigation method according to any one of the first aspect or the possible implementations of the first aspect.

According to a fifth aspect, a navigation system is provided, including a first apparatus, a second apparatus, and a processing apparatus. The processing apparatus is configured to perform the navigation method according to any one of the first aspect or the possible implementations of the first aspect, to jointly display the navigation information through the first apparatus and the second apparatus.

According to a sixth aspect, a computer-readable storage medium is provided. The computer-readable storage medium stores computer instructions, and when the computer instructions are run on a computer, the navigation method according to any one of the first aspect or the possible implementations of the first aspect is implemented.

According to a seventh aspect, a computer program product is provided, including computer program code. When the computer program code is run on a computer, the computer is enabled to perform the navigation method according to any one of the first aspect or the possible implementations of the first aspect.

According to an eighth aspect, a computing device is provided, including at least one processor and a memory. The at least one processor is coupled to the memory, and is configured to read and execute instructions in the memory, to perform the navigation method according to any one of the first aspect or the possible implementations of the first aspect.

According to a ninth aspect, a chip is provided. The chip includes a processor and a data interface. The processor reads, through the data interface, instructions stored in a memory, to perform the navigation method according to any one of the first aspect or the possible implementations of the first aspect.

Optionally, in an implementation, the chip may further include a memory. The memory stores instructions. The processor is configured to execute the instructions stored in the memory. When the instructions are executed, the processor is configured to perform the navigation method according to any one of the first aspect or the possible implementations of the first aspect.

In embodiments of this application, the first navigation identifier is displayed in front of the vehicle through the first apparatus, for example, the first navigation identifier is displayed in the front non-ground area of the vehicle through the first apparatus (specifically, for example, through the first apparatus, a virtual image is formed on the front windshield and the first navigation identifier is displayed); and the second navigation identifier is displayed in front of the vehicle through the second apparatus, for example, the second navigation identifier is displayed on the ground in front of the vehicle through the second apparatus, where the first navigation identifier and the second navigation identifier can jointly display the navigation information. Compared with a manner of displaying navigation information by a single apparatus, this displays the navigation information more clearly and more flexibly, to provide multi-dimensional navigation information for the driver, thereby improving navigation flexibility and a navigation effect, and improving navigation experience. It is proposed that when the preset condition is met, the second navigation identifier may be displayed in front of the vehicle through the first apparatus, so that a display effect of the navigation information can still be ensured when the second navigation identifier cannot be displayed in front of the vehicle through the second apparatus or an effect of the second navigation identifier displayed through the second apparatus is poor. The first navigation identifier and the second navigation identifier are displayed synchronously, to ensure a display effect of the navigation information and improve navigation experience. The navigation information that is jointly displayed by using the first navigation identifier and the second navigation identifier may be presented in the three-dimensional effect, to enhance integration of the navigation information and the real environment, so that the navigation route can be seen more intuitively from the perspective of the driver, safety is improved, and navigation experience and navigation efficiency are improved. In addition to displaying the first route guide identifier in front of the vehicle through the first apparatus, the ground projection identifier corresponding to the first route guide identifier is displayed in front of the vehicle through the second apparatus, to enhance integration of the first route guide identifier and the real ground, so that the route guided by the first route guide identifier can be seen more intuitively from the perspective of the driver, to improve safety and improve navigation experience and navigation efficiency. In addition to displaying the second route guide identifier in front of the vehicle through the first apparatus, the third route guide identifier is displayed in front of the vehicle through the second apparatus, to jointly guide the route based on the second route guide identifier and the third route guide identifier, so that the route guided by the route guide identifiers can be seen more intuitively from the perspective of the driver, to improve safety and improve navigation experience and navigation efficiency. When the first navigation identifier is displayed in the front non-ground area of the vehicle through the HUD apparatus, the second navigation identifier is displayed on the ground in front of the vehicle through the vehicle light, to jointly display the navigation information. Compared with a conventional manner in which navigation information is displayed only through the HUD apparatus, this can improve a display effect of the navigation information, so that the driver can better determine a location and an indication meaning of the navigation identifier, and more easily determine a navigation route, to improve navigation experience.

### BRIEF DESCRIPTION OF DRAWINGS

FIG. 1 is an example of a functional block diagram of a vehicle 100 according to an embodiment of this application;
(a) in FIG. 2 is an example diagram of a vehicle cabin scenario according to an embodiment of this application;

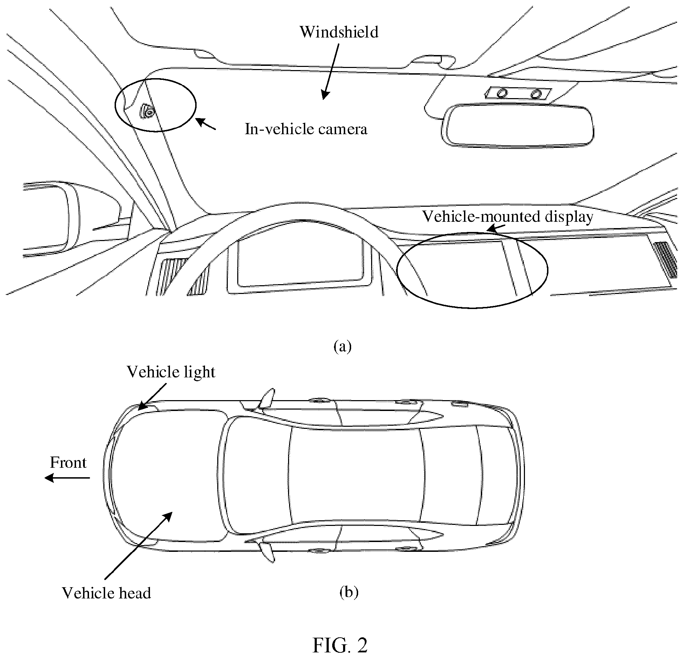

(b) in FIG. 2 is an example top view of an entire vehicle according to an embodiment of this application;

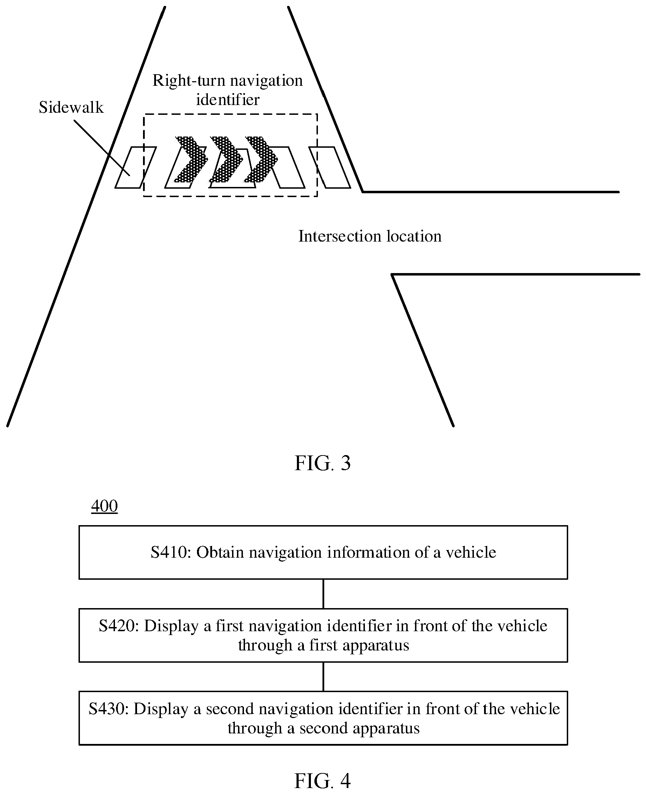

FIG. 3 is an example diagram of displaying navigation information through an AR-HUD apparatus according to an embodiment of this application;
FIG. 4 is an example diagram of a navigation method according to an embodiment of this application;

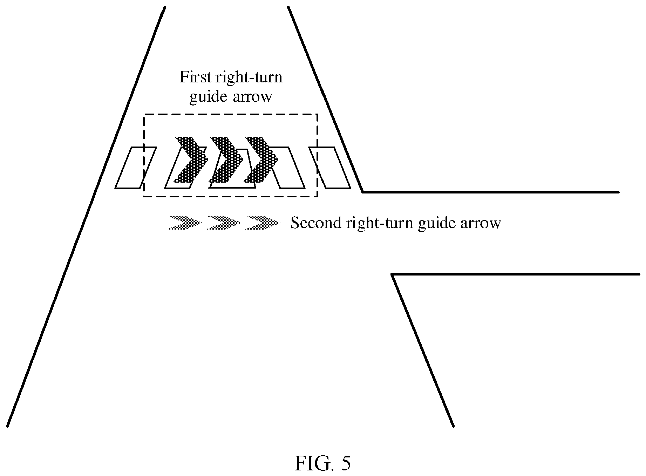

FIG. 5 is an example diagram of displaying navigation information according to an embodiment of this application;

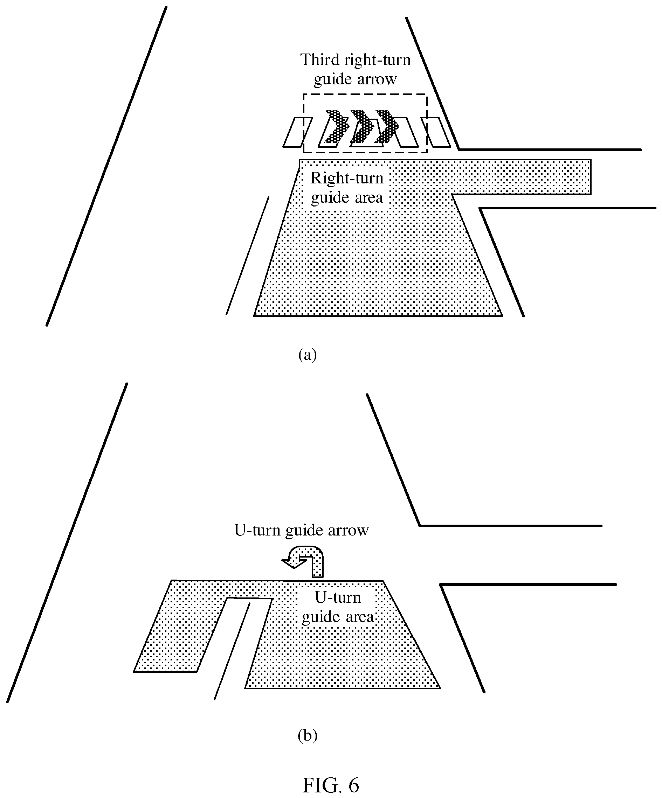

FIG. 6 is another example diagram of displaying navigation information according to an embodiment of this application;

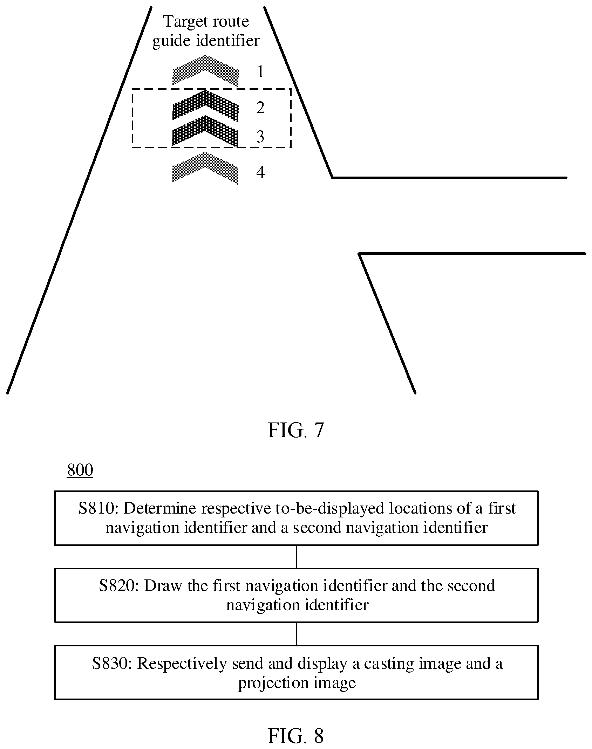

FIG. 7 is still another example diagram of displaying navigation information according to an embodiment of this application;
FIG. 8 is an example flowchart of jointly displaying navigation information according to an embodiment of this application;

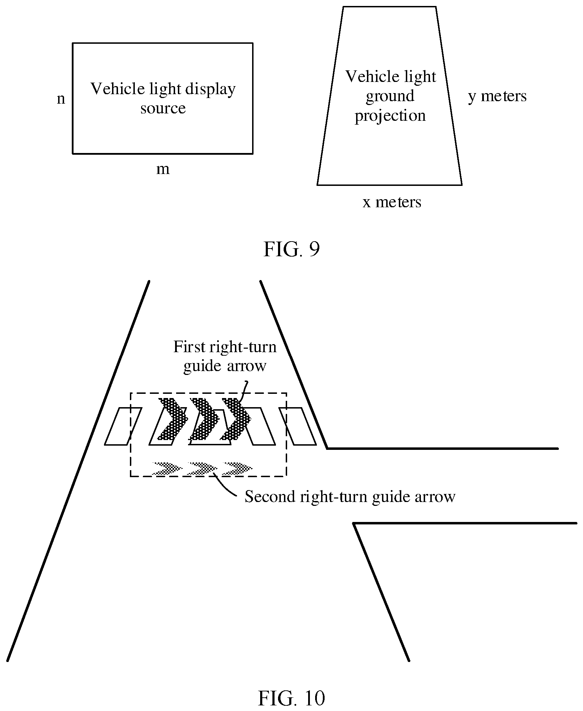

FIG. 9 is an example diagram of a vehicle light display source and a corresponding ground projection according to an embodiment of this application;
FIG. 10 is yet another example diagram of displaying navigation information according to an embodiment of this application;

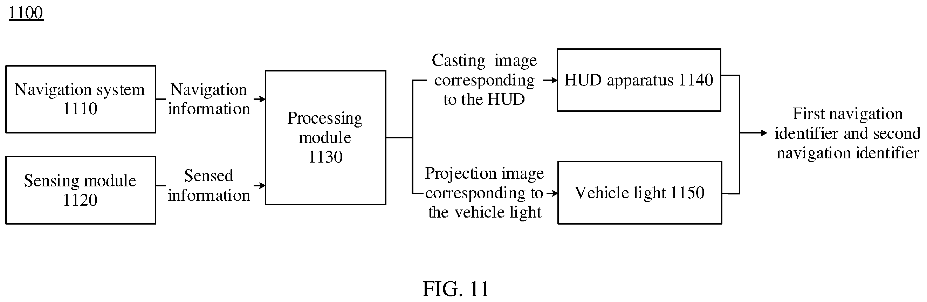

FIG. 11 is an example diagram of a system architecture according to an embodiment of this application;

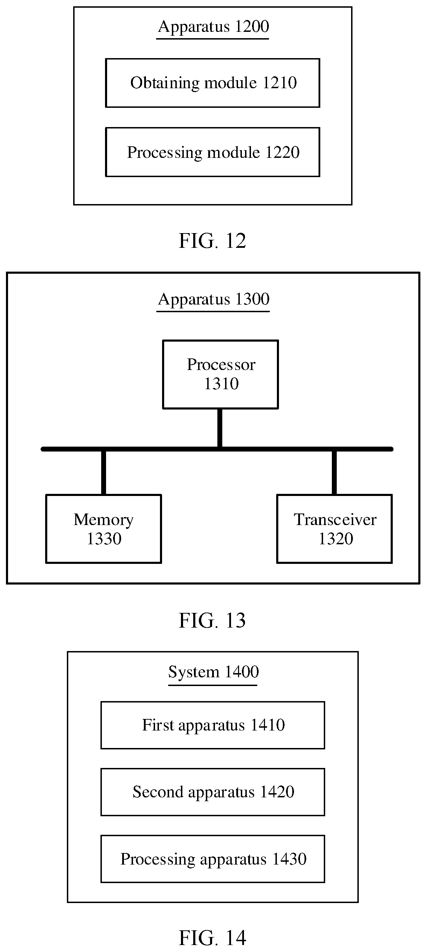

FIG. 12 is an example diagram of a navigation apparatus according to an embodiment of this application;
FIG. 13 is an example block diagram of a navigation apparatus according to an embodiment of this application; and
FIG. 14 is an example diagram of a navigation system according to an embodiment of this application.

### DESCRIPTION OF EMBODIMENTS

The following describes technical solutions of embodiments in this application with reference to accompanying drawings.

The solutions of this application may be applied to a vehicle, for example, may be applied to a navigation scenario in a traveling process of the vehicle. The vehicle is a vehicle in a broad sense. The vehicle may be a transportation tool (for example, a commercial vehicle, a passenger vehicle, a truck, or a train), an industrial vehicle (for example, a forklift truck, a trailer, or a tractor), an engineering vehicle (for example, an excavator or a bulldozer), an agricultural device (for example, a lawn mower or a harvester), a recreational device, a toy vehicle, or the like. A type of the vehicle is not specifically limited in embodiments of this application.

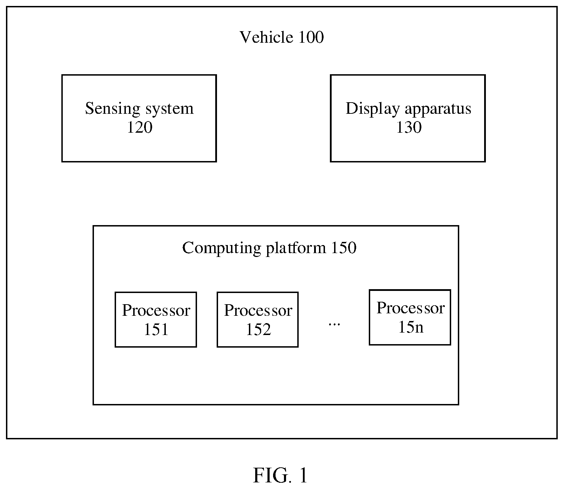

FIG. 1 is an example of a functional block diagram of a vehicle 100 according to an embodiment of this application. As shown in FIG. 1, the vehicle 100 may include a sensing system 120, a display apparatus 130, and a computing platform 150. The sensing system 120 may include one or more sensors that sense information about an ambient environment of the vehicle 100. For example, the sensing system 120 may include a positioning system, and the positioning system may be a global positioning system (global positioning system, GPS), or may be a BeiDou system or another positioning system, or an inertial measurement unit (inertial measurement unit, IMU). For another example, the sensing system 120 may further include one or more of a lidar, a millimeter-wave radar, an ultrasonic radar, and a camera apparatus.

The display apparatus 130 of the vehicle 100 is mainly classified into four types. A first type of display apparatus is a vehicle-mounted display; a second type of display apparatus is a projection display apparatus, for example, a head up display (head up display, HUD) apparatus; a third type of display apparatus is a vehicle light display apparatus; and a fourth type of display apparatus is another display apparatus that establishes a connection to a vehicle-mounted processing apparatus (for example, a head unit), for example, a mobile phone or a tablet computer. The vehicle-mounted display is a physical display, and is an important part of an in-vehicle infotainment system. A plurality of displays may be disposed in a cabin, for example, a digital dashboard display, a central display, a display in front of a passenger in a front passenger seat (also referred to as a front-row passenger), a display in front of a rear-seat passenger on the left, and a display in front of a rear-seat passenger on the right. Even a window may be used as a display for display. The HUD apparatus, also referred to as a head-up display apparatus, is mainly configured to project information such as a vehicle speed, a fuel amount, and navigation onto a windshield of the vehicle 100. After being reflected by the windshield, a virtual image is formed at a specific distance in front of a line of sight of a driver, so that the driver can see the information without a need to lower the head. This reduces line-of-sight transfer time of the driver, avoids a pupil change caused by a line-of-sight transfer of the driver, and improves driving safety and driving comfort. For example, the HUD includes a combiner-head up display (combiner-HUD, C-HUD) system, a windshield-head up display (windshield-HUD, W-HUD) system, and an augmented reality-head up display (augmented reality-HUD, AR-HUD) system. Currently, a conventional HUD mainly displays vehicle instrument information such as a vehicle speed and a fuel amount. Compared with the conventional HUD, the AR-HUD has a larger field of view and a farther screen, and can integrate an AR image with real ambient information. This enhances a driver's acquisition of road information, and implements functions such as AR navigation, an adaptive cruise, and lane deviation warning. The vehicle light display apparatus may include a digital projection light. The digital projection light includes a large quantity of micro reflector units. A required pattern is formed on the ground in front of, behind, or around the vehicle by controlling a state of each micro reflector unit, for the driver or a pedestrian to observe. Alternatively, the vehicle light display apparatus may include an LED light. The LED includes a large quantity of light bead units. A required pattern is formed on the ground in front of, behind, or around the vehicle by controlling an on/off state of each light bead unit, for the driver or a pedestrian to observe.

Some or all functions of the vehicle 100 may be controlled by the computing platform 150. The computing platform 150 may include one or more processors, for example, processors 151 to 15n (where n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors 151 to 15n may invoke the instructions in the memory to execute the instructions, to implement a corresponding function.

In embodiments of this application, the processor may determine a navigation identifier based on navigation information, determine a to-be-displayed location of the navigation identifier in a real environment with reference to ambient real environment information that is of the vehicle 100 and that is obtained from the sensing system 120, and then display the navigation identifier in the real environment through the display apparatus 130, to guide traveling of the vehicle. In some possible implementations, the ambient environment information of the vehicle 100 may be further stored in the memory of the computing platform 150 in a form of data. It should be understood that the foregoing operations may be performed by a same processor, or may be performed by a plurality of processors. This is not specifically limited in embodiments of this application.

(a) in FIG. 2 is an example diagram of a vehicle cabin scenario according to an embodiment of this application. One or more cameras may be mounted inside or outside a cabin, and are configured to capture an image inside or outside the cabin, for example, a camera of a driver monitor system (driver monitor system, DMS), a camera of a cabin monitor system (cabin monitor system, CMS), a camera of a dashcam (dashcam), and a camera (for example, a digital video recorder (digital video recorder, DVR)) configured to detect a situation outside the cabin. (a) in FIG. 2 uses a camera disposed on an A-pillar as an example. Cameras configured to capture images inside and outside the cabin may be a same camera, or may be different cameras. It should be understood that in embodiments of this application, a location of the camera that collects image information of the inside of the cabin is not specifically limited. The camera may be located on the A-pillar shown in FIG. 2, or may be located below a steering wheel, or may be located on a B-pillar, or may be located near a rear-view mirror, or the like.

In addition, a vehicle-mounted display is further disposed in the cabin. In (a) in FIG. 2, a display disposed in a central control area is used as an example, and one or more of information (for example, navigation information) required for driving, audio and video entertainment information, vehicle configuration information, and the like may be displayed through the vehicle-mounted display. In addition, an HUD apparatus may be further disposed in the cabin. Information such as a vehicle speed, a fuel amount, and navigation information may be projected onto a windshield of a vehicle through the HUD apparatus. A virtual image is formed at a specific distance in front of a line of sight of a driver through reflection of the windshield. In addition, a vehicle light may be further disposed inside or outside the cabin, and a required pattern is formed in front of, behind, or around the vehicle for the driver or a pedestrian to observe. The front of the vehicle may be a front of a vehicle head, or may be a part that is in the cabin and that is close to the vehicle head. For a vehicle head location, refer to (b) in FIG. 2.

A camera, an in-vehicle processor, and a vehicle display apparatus (for example, a vehicle-mounted display, an HUD apparatus, and a vehicle light) on the vehicle may jointly display navigation information. Specifically, in a traveling process of the vehicle, the camera may obtain information such as an ambient environment and a road, and the in-vehicle processor may determine, based on the navigation information and the information obtained by the camera, information that needs to be displayed by the vehicle display apparatus, and determine whether the vehicle display apparatus can display the information.

For example, when the navigation information indicates to turn right at a front intersection, and the camera detects that current ambient luminance is low, the in-vehicle processor may determine, based on the navigation information and the information obtained by the camera, that the navigation information that needs to be displayed by the vehicle display apparatus indicates turning right at the front intersection, and determine whether display of the vehicle light, the vehicle-mounted display, and the HUD apparatus is affected by the current ambient luminance. If display is not affected, the in-vehicle processor may select any one or more of the display apparatuses to display a turning-right-at-front-intersection identifier. For example, the vehicle light is selected for display. If the ambient environment is dark, and the driver cannot clearly determine a location of a road and a boundary of the road based on the current ambient luminance, an area identifier may be used when the turning-right-at-front-intersection identifier is displayed through the vehicle light, that is, a right-turn lane area is illuminated by the vehicle light, to guide the driver to drive to a right-turn lane. If the ambient environment is dark, but the driver can clearly determine the location of the road and the boundary of the road based on the current ambient luminance, when the turning-right-at-front-intersection identifier is displayed through the vehicle light, a right-turn arrow identifier may be used to guide the driver to drive to the right-turn lane.

For another example, when the navigation information indicates to turn right at the front intersection, and the camera detects that the vehicle is currently located in a congested road section, the in-vehicle processor may determine, based on the navigation information and the information obtained by the camera, that the right-turn identifier cannot be displayed on the ground of the front intersection through the vehicle light in the vehicle display apparatus, but may be displayed through the vehicle-mounted display and the HUD apparatus. In this case, the navigation information indicating turning right at the front intersection may be displayed through the vehicle-mounted display and/or the HUD apparatus, to guide the driver to drive.

FIG. 3 is an example diagram of displaying navigation information through an AR-HUD apparatus according to an embodiment of this application. A navigation identifier is projected onto a windshield of a vehicle through the AR-HUD apparatus, and after reflection through the windshield, a virtual image of the navigation identifier that is integrated with a real environment is formed at a specific distance in front of a line of sight of a driver, so that the driver can see navigation information without a need to lower the head. In this way, driving safety is improved. However, the virtual image is essentially on a two-dimensional plane, and is not a real three-dimensional effect. As a result, it is difficult to determine a specific location of the navigation identifier from a perspective of the driver. This affects a display effect of the navigation information, and causes poor navigation experience of the driver. As shown in FIG. 3, based on a coordinate location of an intersection, a right-turn navigation identifier is cast onto an intersection location in front of the line of sight of the driver through the AR-HUD apparatus, to notify the driver to turn right at the intersection location. However, it is difficult to determine, based on a currently displayed perspective of the driver, whether the arrow is in front or rear of a sidewalk (the front may be understood as a side closer to a vehicle head location, and the rear may be understood as a side far away from the vehicle head location). An AR-HUD user is brought back to reality from an AR scenario. This greatly affects AR experience.

In embodiments of this application, a first navigation identifier is displayed in front of the vehicle through a first apparatus, and a second navigation identifier is displayed in front of the vehicle through a second apparatus, to jointly display the navigation information, so that a display effect of the navigation information can be ensured, to provide multi-dimensional navigation information for the driver, improve navigation flexibility and a navigation effect, and improve navigation experience.

The first apparatus and the second apparatus may be apparatuses disposed on the vehicle, may be front-mounted apparatuses or rear-mounted apparatuses, or may be outer-mounted apparatuses or inner-mounted apparatuses, for example, HUD apparatuses, vehicle-mounted displays, or vehicle lights (for example, headlights). Alternatively, one or both of the first apparatus and the second apparatus may be an apparatus/apparatuses that establishes/establish a connection to a vehicle-mounted processing apparatus (for example, a head unit), for example, a mobile phone or a tablet computer. In embodiments of this application, "front of the vehicle" may mean "front of a vehicle head", "part that is close to the vehicle head in a cabin", "front ground area of the vehicle", or "front non-ground area of the vehicle".

For example, the first navigation identifier may be displayed in the front non-ground area of the vehicle through the first apparatus, and the second navigation identifier may be displayed in the front ground area of the vehicle through the second apparatus (for example, a right-turn guide arrow is displayed in the front non-ground area of the vehicle through the first apparatus, and a right-turn guide area is displayed in the front ground area of the vehicle through the second apparatus), to provide multi-dimensional navigation information for the driver, improve navigation flexibility and a navigation effect, and improve navigation experience.

For example, the first navigation identifier may be displayed in the front non-ground area of the vehicle through the first apparatus, and the second navigation identifier may be displayed in the front non-ground area of the vehicle through the second apparatus (for example, a right-turn guide arrow is displayed in the front non-ground area of the vehicle through the first apparatus, and a projection of the right-turn guide arrow is displayed in the front non-ground area of the vehicle through the second apparatus, so that the right-turn guide arrow presents a three-dimensional effect from an overall perspective), to provide more navigation information for the driver, improve navigation flexibility and a navigation effect, and improve navigation experience.

For example, the first navigation identifier may be displayed in the front ground area of the vehicle through the first apparatus, and the second navigation identifier may be displayed in the front non-ground area of the vehicle through the second apparatus (for example, a right-turn guide arrow is displayed in the front ground area of the vehicle through the first apparatus, and the right-turn guide arrow is also displayed in the front non-ground area of the vehicle through the second apparatus), to provide multi-dimensional navigation information for the driver, improve navigation flexibility and a navigation effect, and improve navigation experience.

For example, the first navigation identifier may be displayed in the front ground area of the vehicle through the first apparatus, and the second navigation identifier may be displayed in the front ground area of the vehicle through the second apparatus (for example, a right-turn guide arrow is displayed in the front ground area of the vehicle through the first apparatus, and a right-turn guide area is displayed in the front ground area of the vehicle through the second apparatus), to provide more navigation information for the driver, improve navigation flexibility and a navigation effect, and improve navigation experience.

In embodiments of this application, "front of the vehicle" may also be referred to as "vehicle front" for short. This is not distinguished in this application.

For example, the first apparatus is an HUD apparatus, and the second apparatus is a vehicle light. For a specific implementation, refer to the following descriptions.

For example, the first apparatus is an HUD apparatus, and the second apparatus is a mobile phone that establishes a connection to a vehicle-mounted processing apparatus (for example, a head unit). For example, a virtual image of the first navigation identifier may be formed by projection on a front windshield of the vehicle through the HUD apparatus. In addition, the mobile phone may be placed in a location that is close to the vehicle head in a cabin, and the second navigation identifier is displayed in front of the vehicle through the mobile phone. For ease of understanding, in the following embodiments, an example in which the first apparatus is an HUD apparatus and the second apparatus is a vehicle light is mainly used for description.

FIG. 4 is an example diagram of a navigation method according to an embodiment of this application. The method 400 may be performed by a processing apparatus. The processing apparatus has a processing function. For example, the processing apparatus may be one or more of apparatuses having a processing function, for example, a head unit, a vehicle-mounted chip, a vehicle-mounted processor, a computing platform 150, or a server. As shown in FIG. 4, the method 400 includes step S410 to step S430. The following describes these steps in detail.

S410: Obtain navigation information of a vehicle.

The navigation information may be route guide information. Based on the navigation information, a driver may learn in advance information such as a direction in which the vehicle should travel, a lane in which the vehicle should travel, a restricted area of the vehicle, and whether to turn left, turn right, go straight, or make a U-turn at a next intersection.

Optionally, the navigation information may be obtained from a navigation system of the vehicle, or may be obtained from a navigation system of a terminal device like a mobile phone, or may be obtained from a server of a third-party platform. The third-party platform may provide a navigation service for the driver. The server may be a local server, or may be a cloud server. For example, the vehicle may report information about a start location, a current location, and a destination to the server, and the server generates the navigation information from a database, and sends the navigation information to the vehicle.

S420: Display a first navigation identifier in front of the vehicle through a first apparatus.

For example, after obtaining the navigation information, the processing apparatus may generate a casting image corresponding to the first apparatus (namely, an image corresponding to a display source of the first apparatus), and then transmit the casting image corresponding to the first apparatus to the first apparatus, to display the first navigation identifier in front of the vehicle through the first apparatus. For a manner of generating the casting image corresponding to the first apparatus, refer to example descriptions in the following procedure 800.

S430: Display a second navigation identifier in front of the vehicle through a second apparatus.

For example, after obtaining the navigation information, the processing apparatus may generate a projection image corresponding to the second apparatus (namely, an image corresponding to a display source of the second apparatus), and then transmit the projection image corresponding to the second apparatus to the second apparatus, to display the second navigation identifier in front of the vehicle through the second apparatus. For a manner of generating the projection image corresponding to the second apparatus, refer to example descriptions in the following procedure 800.

In step S420 and step S430, "front of the vehicle" may mean "front of a vehicle head", "part that is close to the vehicle head in a cabin", "front ground area of the vehicle", or "front non-ground area of the vehicle". For details, refer to the foregoing descriptions. The front non-ground may be, for example, a two-dimensional plane at a specific distance in front of a line of sight of the driver. The two-dimensional plane may be used to display a virtual image formed through reflection of a front windshield (for example, displaying through an HUD apparatus may be understood as displaying on the front non-ground of the vehicle). The front non-ground may be, for example, a location of a vehicle-mounted component close to the vehicle head in the cabin, or may be a location of a vehicle-mounted component in a vehicle head part. This is not limited.

The first navigation identifier and the second navigation identifier are used to jointly display the navigation information. Specifically, the first navigation identifier and the second navigation identifier may jointly guide a traveling path of the vehicle based on identifiers in different forms or shapes. For example, when the navigation information indicates to turn right in the front, the first navigation identifier and the second navigation identifier may be used to respectively guide the right turn in different forms or shapes (refer to FIG. 5 and (a) in FIG. 6).

In this embodiment of this application, the first navigation identifier is displayed in front of the vehicle through the first apparatus, for example, the first navigation identifier is displayed in the front non-ground area of the vehicle through the first apparatus (specifically, for example, through the first apparatus, a virtual image is formed on the front windshield and the first navigation identifier is displayed); and the second navigation identifier is displayed in front of the vehicle through the second apparatus, for example, the second navigation identifier is displayed on the ground in front of the vehicle through the second apparatus, where the first navigation identifier and the second navigation identifier can jointly display the navigation information. Compared with a manner of displaying navigation information by a single apparatus, this displays the navigation information more clearly and more flexibly, to provide multi-dimensional navigation information for the driver, thereby improving navigation flexibility and a navigation effect, and improving navigation experience.

For example, the first apparatus performs projection on the front windshield of the vehicle and forms a virtual image of the first navigation identifier. Generally, the virtual image is essentially on a two-dimensional plane of the front non-ground area of the vehicle, and is not a real three-dimensional effect. In this embodiment of this application, the first navigation identifier is displayed on the front non-ground of the vehicle through the first apparatus, and the second navigation identifier is displayed on the ground in front of the vehicle through the second apparatus, to jointly display the navigation information. Compared with a manner of displaying a navigation identifier on the front non-ground of the vehicle only through the first apparatus, this can make the driver better determine a location and an indication meaning of the navigation identifier, and can implement a better display effect and more flexibility through combination of the first navigation identifier and the second navigation identifier, so that the driver can easily determine a navigation route, and navigation experience is improved.

With reference to the accompanying drawings, the following describes an example of a specific implementation in which the first navigation identifier and the second navigation identifier are jointly used to guide a traveling route of the vehicle.

In an implementation, the navigation information that is jointly displayed by using the first navigation identifier and the second navigation identifier may be presented in a three-dimensional effect, to enhance integration of the navigation information and a real environment, so that a navigation route can be seen more intuitively from a perspective of the driver, safety is improved, and navigation experience and navigation efficiency are improved.

Optionally, the first navigation identifier may include a first route guide identifier, and the second navigation identifier may include a ground projection identifier corresponding to the first route guide identifier. Specifically, the first route guide identifier and the ground projection identifier jointly present a three-dimensional effect.

In embodiments of this application, in addition to displaying the first route guide identifier in front of the vehicle through the first apparatus, the ground projection identifier corresponding to the first route guide identifier is displayed in front of the vehicle through the second apparatus, so that the driver can see the first route guide identifier presenting the three-dimensional effect. This can enhance integration of the first route guide identifier and the real ground, so that a route guided by the first route guide identifier can be seen more intuitively from the perspective of the driver, to improve safety and improve navigation experience and navigation efficiency.

For example, FIG. 5 is an example diagram of displaying navigation information according to an embodiment of this application. As shown in FIG. 5, in this example, the first route guide identifier is a first right-turn guide arrow that is displayed on the front non-ground of the vehicle, and the ground projection identifier corresponding to the first route guide identifier is a second right-turn guide arrow that is displayed on the ground in front of the vehicle. The second right-turn guide arrow displayed on the ground is a ground projection whose shape is the first right-turn guide arrow from the perspective of the driver. From an overall perspective, the first right-turn guide arrow and the second right-turn guide arrow present a three-dimensional effect. In this way, the driver can intuitively observe that the right-turn guide arrow is located in front of a sidewalk, and determine, in view of this, to turn right in front of the sidewalk.

In another implementation, the first navigation identifier may include a second route guide identifier, and the second navigation identifier may include a third route guide identifier.

In embodiments of this application, in addition to displaying the second route guide identifier in front of the vehicle through the first apparatus, the third route guide identifier is displayed in front of the vehicle through the second apparatus, to jointly guide a route based on the second route guide identifier and the third route guide identifier, so that the route guided by route guide identifiers can be seen more intuitively from the perspective of the driver, to improve safety and improve navigation experience and navigation efficiency.

In an example, the second route guide identifier may include a route guide arrow, and the third route guide identifier may include a route guide area.

FIG. 6 is another example diagram of displaying navigation information according to an embodiment of this application. As shown in (a) in FIG. 6, the second route guide identifier includes a route guide arrow that is displayed on the front non-ground of the vehicle, for example, a third right-turn guide arrow. The third route guide identifier includes a route guide area that is displayed on the ground in front of the vehicle, for example, a right-turn guide area. The right-turn guide area may indicate a right-turn location and a traveling path of the vehicle at an intersection, so that the driver can intuitively determine to turn right in front of the sidewalk. As shown in (b) in FIG. 6, the second route guide identifier includes a route guide arrow displayed on the ground in front of the vehicle, for example, a U-turn guide arrow, and the third route guide identifier includes a route guide area displayed on the ground in front of the vehicle, for example, a U-turn guide area, so that the driver can intuitively determine to make a U-turn at an intersection.

In another example, the second route guide identifier may include a first part of a target route guide identifier, and the third route guide identifier may include a second part of the target route guide identifier.

FIG. 7 is still another example diagram of displaying navigation information according to an embodiment of this application. As shown in FIG. 7, in this example, the target route guide identifier includes an arrow 1 to an arrow 4, the second route guide identifier includes an arrow 2 and an arrow 3, and the third route guide identifier includes an arrow 1 and an arrow 4. The arrow 1 and the arrow 4 are displayed on the ground, and the arrow 2 and the arrow 3 are displayed in a non-ground area. In view of this, the driver can observe the target route guide identifier, and because the route guide identifier is partially displayed on the ground, integration of the target guide identifier and a real environment is improved. In addition, the route guide identifier partially displayed on the ground may be further used to remind a pedestrian, so that the pedestrian can determine, based on the identifier, whether to walk.

It should be understood that FIG. 5 to FIG. 7 are merely examples. A presentation form and shape of the navigation identifier are not limited in embodiments of this application, provided that the navigation identifier can be used to guide a traveling path of the vehicle.

In an optional design, the first apparatus may be an HUD apparatus, and the second apparatus may be a vehicle light. The vehicle light includes a plurality of independently controllable projection units, and the plurality of independently controllable projection units are configured to control a projection direction, so that the second navigation identifier is displayed on the ground in front of the vehicle. In another optional design, the second apparatus may alternatively be another auxiliary apparatus on the vehicle or on a road, provided that the second navigation identifier can be displayed in front of the vehicle and can be combined with the first navigation identifier displayed by the vehicle to display the navigation information. This is not limited in this application. It should be understood that the HUD apparatus in embodiments of this application may be understood as an AR-HUD apparatus, which is briefly referred to as an HUD apparatus in the following for ease of description.

In the optional designs, when the first navigation identifier is displayed in the front non-ground area of the vehicle through the HUD apparatus, the second navigation identifier may be displayed on the ground in front of the vehicle through the vehicle light, to jointly display the navigation information. Compared with a conventional manner in which navigation information is displayed only through the HUD apparatus, this can make the driver observe the navigation information without a need to lower the head, to improve vehicle driving safety, and can improve a display effect of the navigation information, so that the driver can better determine a location and an indication meaning of the navigation identifier, and more easily determine a navigation route, to improve navigation experience.

Optionally, the vehicle light may be a digital projection light. In this case, the plurality of independently controllable projection units may be micro reflectors. In an actual operation, a deflection degree of each micro reflector may be controlled to control the micro reflector to reflect light or not to reflect light, to display the second navigation identifier on the ground in front of the vehicle.

Optionally, the vehicle light may alternatively be an LED light. In this case, the plurality of independently controllable projection units are LED light beads. In an actual operation, each LED light bead may be controlled to be turned on or off, to control the LED light bead to cast light or not to cast light in front of the vehicle, to display the second navigation identifier on the ground in front of the vehicle.

Optionally, the first navigation identifier and the second navigation identifier may be displayed synchronously, and may not overlap or affect each other, to ensure a display effect of jointly displaying the navigation information.

Optionally, in an actual operation, to-be-displayed locations of the first navigation identifier and the second navigation identifier in front of the vehicle may be separately determined in advance. Next, a casting image corresponding to the first apparatus (namely, the image corresponding to the display source of the first apparatus) and a projection image corresponding to the second apparatus (namely, the image corresponding to the display source of the second apparatus) are reversely determined based on the to-be-displayed locations of the first navigation identifier and the second navigation identifier. Then, the first navigation identifier and the second navigation identifier are respectively displayed at respective corresponding to-be-displayed locations through the first apparatus and the second apparatus. The following describes the implementation process by using an example with reference to FIG. 8.

FIG. 8 is an example flowchart of jointly displaying navigation information according to an embodiment of this application. For ease of description, in this example, joint display through an HUD apparatus and a vehicle light is mainly used as an example for description. A procedure 800 includes step S810 to step S830. The following describes these steps.

S810: Determine respective to-be-displayed locations of a first navigation identifier and a second navigation identifier, that is, separately determine locations of the first navigation identifier and the second navigation identifier relative to a vehicle.

Specifically, navigation at an intersection is used as an example. In a traveling process of the vehicle, a location and a posture of the vehicle in a world coordinate system may be obtained in real time through an IMU and a GPS of the vehicle, and world coordinates of the intersection are obtained through parsing with reference to navigation information and environment information. Then, a location of the intersection relative to the vehicle is determined. Because the first navigation identifier and the second navigation identifier need to indicate turning left, turning right, going straight, or making a U-turn at the intersection, the first navigation identifier and the second navigation identifier need to be displayed at the intersection from a perspective of a driver. In view of this, the locations of the first navigation identifier and the second navigation identifier relative to the vehicle may be separately determined.

S820: Draw the first navigation identifier and the second navigation identifier.

It should be understood that before drawing, it is first required to determine, based on the navigation information, whether to turn left, turn right, go straight, or make a U-turn at the intersection, and then separately determine, based on the navigation information and the perspective of the driver, shapes and locations of the first navigation identifier and the second navigation identifier that need to be displayed at the intersection.

Then, the first navigation identifier and the second navigation identifier may be drawn by simulating an actual scenario based on three-dimensional coordinate points in three-dimensional rendering space. It should be understood that the first navigation identifier and the second navigation identifier drawn in the three-dimensional space should not overlap or affect each other.

Then, a casting image corresponding to an HUD apparatus and a projection image corresponding to a vehicle light are obtained through reverse calculation based on the drawn shapes of the first navigation identifier and the second navigation identifier that need to be displayed at the intersection. After the casting image is cast through the HUD apparatus, the first navigation identifier may be displayed at the intersection from the perspective of the driver. After the projection image is projected through the vehicle light, the second navigation identifier may be displayed at the intersection.

Optionally, for the HUD apparatus, the first navigation identifier that needs to be displayed in the front may be cast in advance onto an imaging near plane through a viewing frustum, to obtain the casting image corresponding to the HUD apparatus. A related parameter of the viewing frustum is determined based on an optical component in the HUD apparatus.

Optionally, for the vehicle light, when there is no shield in front of the vehicle, projection may be performed on the ground through the vehicle light in advance, and a location of a center point of a downward ground projection of the vehicle light relative to the vehicle when the vehicle is at a specific vehicle body location and a projection range are obtained. Then, in view of this, a table of mapping between a vehicle light display source (namely, m*n independently controllable projection units of the vehicle light) and a ground projection area x*y of the vehicle light display source is generated. For an example of the vehicle light display source and a corresponding ground projection, refer to FIG. 9. In an actual operation, the projection image corresponding to the vehicle light and a location of the projection image on the display source may be determined based on a shape and a location of the second navigation identifier that needs to be displayed on the ground and the mapping table. In view of this, in an actual operation, a projection unit corresponding to the projection image may be controlled to perform projection (that is, reflect or cast light), and another projection unit does not perform projection (namely, does not reflect or cast light). In this case, a bright region in the ground projection area of the vehicle light is the second navigation identifier. Alternatively, a projection unit corresponding to the projection image is controlled to not perform projection, and another projection unit performs projection. In this case, a dark region in the ground projection area of the vehicle light is the second navigation identifier.

S830: Respectively send and display the casting image and the projection image, that is, respectively transmit the obtained casting image and projection image to the HUD apparatus and the vehicle light for display, to display the first navigation identifier and the second navigation identifier at the intersection location through the HUD apparatus and the vehicle light.

Optionally, a same display frequency may be set for the casting image and the projection image to ensure that the first navigation identifier and the second navigation identifier are displayed synchronously. It should be understood that, in a process of setting the display frequency, a latency of transmitting the casting image to the HUD apparatus and a latency of transmitting the projection image to the vehicle light need to be considered. For example, if a latency of transmitting 60 frames of casting images to the HUD apparatus is 1 second, and a latency of transmitting 50 frames of projection images to the vehicle light is 1 second, it means that a transmission frequency of transmitting the casting image to the HUD apparatus cannot exceed 60 Hz, and a transmission frequency of transmitting the projection image to the vehicle light cannot exceed 50 Hz. Based on transmission frequencies, display frequencies of the HUD apparatus and the vehicle light may be set to not exceed 50 Hz. For example, simultaneous display is implemented at 50 Hz. In addition, generally, when an image switching frequency is greater than or equal to 24 Hz, coherent images may be seen due to a persistence of vision effect. In view of this, in an actual operation, the display frequencies of the casting image and the projection image may be controlled to be greater than or equal to 24 Hz, so that the driver can continuously observe the first navigation identifier and the second navigation identifier based on the persistence of vision effect. It should be understood that the casting image and the projection image are generated in real time based on real-time navigation information and road information.

Optionally, current frame image data (namely, a current frame of casting image and a current frame of projection image) and current accurate display time may be bound based on a timestamp service, to ensure reliability of the image data corresponding to the current time.

Optionally, the foregoing synchronous display may mean that final image data is synchronously displayed, or may mean that generation, transmission, and display of the casting image and the projection image are synchronous.

Optionally, the synchronous display may also refer to synchronous display within a specific error range. For example, because a generation latency, a transmission latency, and a display latency of the casting image may be different from those of the projection image, time for finally displaying image data is different (that is, a time difference exists). In an actual operation, the time difference may be controlled within an appropriate range, provided that the display is performed simultaneously from the perspective of the driver (that is, from the perspective of the driver, a navigation route can be clearly and accurately determined based on the displayed first navigation identifier and second navigation identifier).

The foregoing is detailed descriptions of joint display of the HUD apparatus and the vehicle light. In addition, it should be further understood that, in an actual operation, due to factors such as an environment and a road condition, the second navigation identifier cannot be displayed in front of the vehicle through the second apparatus, or an effect of the second navigation identifier displayed in front of the vehicle is poor, resulting in a poor display effect of the navigation information.

In view of this, in embodiments of this application, it is proposed that when a preset condition is met, the second navigation identifier may be displayed in front of the vehicle through the first apparatus. The preset condition may include: The second navigation identifier cannot be displayed in front of the vehicle through the second apparatus, or the effect of the second navigation identifier displayed in front of the vehicle does not reach a preset effect.

It should be understood that, when the driver cannot clearly and accurately determine a location and an indication meaning of the second navigation identifier displayed through the second apparatus, it may be considered that the effect of the second navigation identifier displayed through the second apparatus does not reach the preset effect. Specifically, whether the driver can clearly and accurately determine the location and the indication meaning of the identifier may be analyzed based on information such as contour clarity and brightness of the second navigation identifier displayed through the second apparatus. The vehicle light is used as an example. If a difference between ambient luminance and projection luminance of the projection unit is not large, a case in which definition of the second navigation identifier is low occurs, so that the effect of the second navigation identifier displayed through the second apparatus does not reach the preset effect.

It should be understood that, that the second navigation identifier cannot be displayed in front of the vehicle through the second apparatus may be understood as that the second navigation identifier cannot be displayed in front of the vehicle through the second apparatus. "Displaying the second navigation identifier on the ground in front of the vehicle through the second apparatus" is used as an example. When the ambient luminance is greater than or equal to operating luminance of the second apparatus, a to-be-displayed ground area of the second navigation identifier is shielded, a to-be-displayed ground area of the second navigation identifier exceeds a ground display area of the second apparatus, or the like, it may be considered that the second navigation identifier cannot be displayed in front of the vehicle through the second apparatus. The vehicle light is used as an example. The operating luminance of the second apparatus may be understood as projection luminance of the projection unit of the second apparatus, and the ground display area of the second apparatus may be understood as a ground projection area of the second apparatus. The to-be-displayed ground area of the second navigation identifier is an area occupied when the second navigation identifier is displayed on the ground.

In embodiments of this application, when the preset condition is met, the second navigation identifier may be displayed in front of the vehicle through the first apparatus, so that a display effect of the navigation information can still be ensured when the second navigation identifier cannot be displayed in front of the vehicle through the second apparatus or the effect of the second navigation identifier displayed through the second apparatus is poor.

The HUD apparatus and the vehicle light are used as an example. When the second navigation identifier cannot be displayed on the ground in front of the vehicle through the vehicle light, or an effect of the second navigation identifier displayed on the ground in front of the vehicle does not reach the preset effect, the second navigation identifier may be displayed through the HUD apparatus. Specifically, the casting image corresponding to the HUD apparatus may be generated based on the first navigation identifier and the second navigation identifier, so that the first navigation identifier and the second navigation identifier are displayed in a front non-ground area of the vehicle through the HUD apparatus.

Optionally, when a first distance between a shield in front of the vehicle and the second apparatus is less than a second distance between the to-be-displayed ground area of the second navigation identifier and the second apparatus, it may be determined that the to-be-displayed ground area of the second navigation identifier is shielded.

In an implementation, the first distance and the second distance each may be a specific value. For example, the first distance may be a distance between a central location of the shield (namely, an obstacle) in front of the vehicle and the second apparatus, and the second distance may be a distance between a central location of the to-be-displayed ground area of the second navigation identifier and the second apparatus. For another example, the first distance may be a distance between the second apparatus and an end that is of the shield in front of the vehicle and that is close to the second apparatus, and the second distance may be a distance between the second apparatus and an end that is of the to-be-displayed ground area of the second navigation identifier and that is far away from the second apparatus. Certainly, the first distance and the second distance may alternatively be defined in another manner. This is not limited in this application.

In another implementation, the first distance and the second distance each may be a value range. For example, a range of the first distance may be [x1, x2], where x1 may be the distance between the second apparatus and the end that is of the shield in front of the vehicle and that is close to the second apparatus, and x2 may be a distance between the second apparatus and an end that is of the shield in front of the vehicle and that is far away from the second apparatus. A range of the second distance may be [y1, y2], where y1 may be a distance between the second apparatus and an end that is of the to-be-displayed ground area of the second navigation identifier and that is close to the second apparatus, and y2 may be the distance between the second apparatus and the end that is of the to-be-displayed ground area of the second navigation identifier and that is far away from the second apparatus.

In still another implementation, one of the first distance and the second distance may be a specific value, and the other may be a value range.

It should be understood that, in an actual operation, the first distance and the second distance may alternatively be distances between the shield and another reference object (for example, a location in a vehicle head) and between the to-be-displayed ground area of the second navigation identifier and the another reference object. This is not limited in this application.

Optionally, when the first navigation identifier and the second navigation identifier are displayed in front of the vehicle through the first apparatus, the navigation information that is jointly displayed by using the first navigation identifier and the second navigation identifier may also be presented in a three-dimensional effect. With reference to FIG. 10, the following describes how to display the navigation information in a three-dimensional effect in the front non-ground of the vehicle through the first apparatus. FIG. 10 is yet another example diagram of displaying navigation information according to an embodiment of this application. As shown in FIG. 10, a first right-turn guide arrow and a second right-turn guide arrow may be simultaneously displayed on a two-dimensional plane in front of the vehicle (namely, the front non-ground area of the vehicle) through the first apparatus. The second right-turn guide arrow is a projection whose shape is the first right-turn guide arrow from the perspective of the driver. From an overall perspective, the first right-turn guide arrow and the second right-turn guide arrow present a three-dimensional effect. In this way, the driver can intuitively observe that the right-turn guide arrow is located in front of a sidewalk, and determine, in view of this, to turn right in front of the sidewalk.

It should be understood that the navigation identifier is merely an example. In an actual operation, the navigation identifier may include a traveling speed identifier, a turning identifier, an obstacle reminder identifier, a lane change reminder identifier, a bridge reminder identifier, an intersection reminder identifier, or the like. This is not limited in this application.

Optionally, in addition to an AR navigation scenario in a traveling process of the vehicle, the solutions of this application may be further applied to scenarios such as a 3D audio and video scenario, an entertainment scenario, and a game scenario in a parking case. For example, a game is used as an example. An element in the game may be displayed in front of the vehicle through the HUD, and a projection of the element or another representation form of the element is displayed on the ground through the vehicle light, so that the element in the game is fully integrated with a real environment scenario. In this way, AR immersion of AR-HUD display can be enhanced, and an experience effect can be optimized.

The following uses an HUD apparatus and a vehicle light as an example to describe a system architecture in embodiments of this application.

FIG. 11 is an example diagram of a system architecture according to an embodiment of this application. As shown in FIG. 11, the system architecture 1100 includes a navigation system 1110, a sensing module 1120, a processing module 1130, an HUD apparatus 1140, and a vehicle light 1150.

The navigation system 1110 is configured to generate navigation information, and transmit the navigation information to the processing module 1130.

For the sensing module 1120, refer to the sensing system 120. The sensing module 1120 is configured to sense information about an environment, a road, an obstacle, and the like, and transmit the sensed information to the processing module 1130.

The processing module 1130 is configured to: determine, based on the navigation information and the sensed information, a first navigation identifier, a second navigation identifier, and respective to-be-displayed locations of the first navigation identifier and the second navigation identifier; then determine, based on the sensed information, whether the second navigation identifier can be displayed on the ground in front of a vehicle through the vehicle light 1150; when the second navigation identifier can be displayed on the ground in front of the vehicle through the vehicle light 1150, reversely calculate a projection image corresponding to the vehicle light 1150 based on the second navigation identifier, then transmit the calculated projection image to the vehicle light 1150, to display the second navigation identifier on the ground in front of the vehicle through the vehicle light 1150, reversely calculate a casting image corresponding to the HUD apparatus 1140 based on the first navigation identifier, and then transmit the calculated casting image to the HUD apparatus 1140, to display the first navigation identifier in a front non-ground area of the vehicle through the HUD apparatus 1140; and when the second navigation identifier cannot be displayed on the ground in front of the vehicle through the vehicle light 1150, reversely calculate the casting image corresponding to the HUD apparatus 1140 based on the first navigation identifier and the second navigation identifier, and then transmit the calculated casting image to the HUD apparatus 1140, to display the first navigation identifier and the second navigation identifier in the front non-ground area of the vehicle through the HUD apparatus 1140. It should be understood that for specific processing content of the processing module 1130, refer to related content in FIG. 4 to FIG. 10. Details are not described again.

FIG. 12 is an example diagram of a navigation apparatus according to an embodiment of this application. The apparatus 1200 may be disposed in the vehicle 100, and may be specifically disposed in the computing platform 150 of the vehicle 100; or may be disposed in an electronic device associated with the vehicle 100; or may be disposed in the processing module 1130 in the system architecture 1100. The apparatus 1200 may be configured to perform the foregoing method 400. The apparatus 1200 includes an obtaining module 1210 and a processing module 1220. The obtaining module 1210 may be configured to perform related operations in step S410, and the processing module 1220 may be configured to perform related operations in step S420 and step S430.

Specifically, the obtaining module 1210 is configured to obtain navigation information of a vehicle. The processing module 1220 is configured to display a first navigation identifier in front of the vehicle through a first apparatus, and is further configured to display a second navigation identifier in front of the vehicle through a second apparatus, where the first navigation identifier and the second navigation identifier are used to jointly display the navigation information.

Optionally, the processing module 1220 may be further configured to: when a preset condition is met, display the second navigation identifier in front of the vehicle through the first apparatus.

Optionally, the preset condition may include: The second navigation identifier cannot be displayed in front of the vehicle through the second apparatus, or an effect of the second navigation identifier displayed in front of the vehicle does not reach a preset effect.

"Displaying the second navigation identifier on the ground in front of the vehicle through the second apparatus" is used as an example. When ambient luminance is greater than or equal to operating luminance of the second apparatus, a to-be-displayed ground area of the second navigation identifier is shielded, a to-be-displayed ground area of the second navigation identifier exceeds a ground display area of the second apparatus, or the like, it may be considered that the second navigation identifier cannot be displayed in front of the vehicle through the second apparatus. A vehicle light is used as an example. The operating luminance of the second apparatus may be understood as projection luminance of a projection unit of the second apparatus, and the ground display area of the second apparatus may be understood as a ground projection area of the second apparatus. The to-be-displayed ground area of the second navigation identifier is an area occupied when the second navigation identifier is displayed on the ground.

Optionally, the processing module 1220 may be further configured to: when a first distance between a shield in front of the vehicle and the second apparatus is less than a second distance between the to-be-displayed ground area of the second navigation identifier and the second apparatus, determine that the to-be-displayed ground area of the second navigation identifier is shielded.

Optionally, the first navigation identifier and the second navigation identifier may be displayed synchronously.

Optionally, the first navigation identifier may include a first route guide identifier, and the second navigation identifier may include a ground projection identifier corresponding to the first route guide identifier.

Optionally, the first navigation identifier may include a second route guide identifier, and the second navigation identifier may include a third route guide identifier.

Optionally, the first apparatus may include an HUD apparatus, and the second apparatus may include a vehicle light. The vehicle light may include a plurality of independently controllable projection units, and the plurality of independently controllable projection units are configured to control a projection direction, so that the second navigation identifier is displayed on the ground in front of the vehicle.

Optionally, the vehicle light may include a digital projection light, and the projection unit may be a micro reflector; or the vehicle light may include an LED light, and the projection unit may be an LED bead.

FIG. 13 is an example block diagram of a navigation apparatus according to an embodiment of this application. Optionally, the apparatus 1300 may be specifically a computer device. The apparatus 1300 shown in FIG. 13 may include a processor 1310, a transceiver 1320, and a memory 1330. The processor 1310, the transceiver 1320, and the memory 1330 are connected through an internal connection path. The memory 1330 is configured to store instructions. The processor 1310 is configured to execute the instructions stored in the memory 1330, so that the transceiver 1320 receives/sends some parameters. Optionally, the memory 1330 may be coupled to the processor 1310 through an interface, or may be integrated with the processor 1310.

It should be noted that the transceiver 1320 may include but is not limited to a transceiver apparatus like an input/output interface (input/output interface), to implement communication between the apparatus 1300 and another device or a communication network.

The processor 1310 may be a general-purpose CPU, a microprocessor, an ASIC, a GPU, or one or more integrated circuits, and is configured to execute a related program, to implement the navigation method in the method embodiments of this application. The processor 1310 may alternatively be an integrated circuit chip and has a signal processing capability. In a specific implementation process, the steps of the navigation method in this application may be completed by using a hardware integrated logic circuit in the processor 1310 or by using instructions in a form of software. The processor 1310 may alternatively be a general-purpose processor, a DSP, an ASIC, an FPGA or another programmable logic device, a discrete gate or transistor logic device, or a discrete hardware component. The processor may implement or perform the methods, the steps, and the logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory 1330. The processor 1310 reads information in the memory 1330, and performs the navigation method in the method embodiments of this application in combination with hardware of the processor.

The memory 1330 may be a read-only memory (read-only memory, ROM), a static storage device, a dynamic storage device, or a random access memory (random access memory, RAM).

The transceiver 1320 uses, for example, but not limited to, a transceiver apparatus of a transceiver type, to implement communication between the apparatus 1300 and another device or a communication network. For example, when the apparatus 1300 is disposed in a vehicle, navigation information may be obtained by using the transceiver 1320.

FIG. 14 is an example diagram of a navigation system according to an embodiment of this application. As shown in FIG. 14, the system 1400 includes a first apparatus 1410, a second apparatus 1420, and a processing apparatus 1430.

For the first apparatus 1410 and the second apparatus 1420, refer to the foregoing descriptions of the first apparatus and the second apparatus. Details are not described again. For example, the first apparatus 1410 may be the HUD apparatus 1140 in the system architecture 1100, and the second apparatus 1420 may be the vehicle light 1150 in the system architecture 1100.

The processing apparatus 1430 may be disposed in the vehicle 100, and may be specifically disposed in the computing platform 150 of the vehicle 100, or may be disposed in an electronic device associated with the vehicle 100. The processing apparatus 1430 may be configured to perform the foregoing method 400. Specifically, the processing apparatus 1430 may obtain navigation information of a vehicle, then obtain input images (namely, display source images, for example, the casting image of the HUD apparatus and the projection image of the vehicle light mentioned above) of the first apparatus 1410 and the second apparatus 1420 based on the navigation information, and transmit the input images to the first apparatus 1410 and the second apparatus 1420. Then, a first navigation identifier is displayed in front of the vehicle through the first apparatus 1410, and a second navigation identifier is displayed in front of the vehicle through the second apparatus 1420. It should be understood that the foregoing operations performed by the processing apparatus 1430 are merely used as an example. For other content of the processing apparatus 1430, refer to related content of the processing module 1130, the apparatus 1200, and the apparatus 1300 in the foregoing system architecture 1100. Details are not described again.

An embodiment of this application further provides a computer program product. The computer program product includes computer program code. When the computer program code is run on a computer, the computer is enabled to implement the method in the foregoing embodiments.

An embodiment of this application further provides a computer-readable storage medium. The computer-readable medium stores program code or instructions. When the computer program code or the instructions are executed by a processor of a computer, the processor is enabled to implement the method in the foregoing embodiments.

An embodiment of this application further provides a chip, including a processor that is configured to read instructions stored in a memory, and when the processor executes the instructions, the chip is enabled to implement the method in the foregoing embodiments.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units may be integrated into one unit.

When the functions are implemented in a form of a software function unit and sold or used as an independent product, the functions may be stored in a computer-readable storage medium. Based on such an understanding, the technical solutions of this application essentially, or the contributing part, or some of the technical solutions may be implemented in a form of a software product. The computer software product is stored in a storage medium, and includes several instructions to enable a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A navigation method, comprising:
obtaining navigation information of a vehicle;
displaying a first navigation identifier in front of the vehicle through a first apparatus; and
displaying a second navigation identifier on the ground in front of the vehicle through a second apparatus, wherein
the first navigation identifier and the second navigation identifier are used to jointly display the navigation information.

2. The method according to claim 1, wherein the method further comprises: when a preset condition is met, displaying the second navigation identifier in front of the vehicle through the first apparatus.

3. The method according to claim 1 or 2, wherein the displaying a first navigation identifier in front of the vehicle through a first apparatus comprises: displaying the first navigation identifier in a non-ground area in front of the vehicle through the first apparatus.

4. The method according to any one of claims 1 to 3, wherein the first navigation identifier and the second navigation identifier are displayed synchronously.

5. The method according to any one of claims 1 to 4, wherein the navigation information that is jointly displayed by using the first navigation identifier and the second navigation identifier is presented in a three-dimensional effect.

6. The method according to claim 5, wherein the first navigation identifier comprises a first route guide identifier, and the second navigation identifier comprises a ground projection identifier corresponding to the first route guide identifier.

7. The method according to any one of claims 1 to 4, wherein the first navigation identifier comprises a second route guide identifier, and the second navigation identifier comprises a third route guide identifier.

8. The method according to claim 7, wherein the second route guide identifier comprises a route guide arrow, and the third route guide identifier comprises a route guide area.

9. The method according to claim 7, wherein the second route guide identifier comprises a first part of a target route guide identifier, and the third route guide identifier comprises a second part of the target route guide identifier.

10. The method according to any one of claims 1 to 9, wherein the first apparatus comprises a head up display HUD apparatus, and the second apparatus comprises a vehicle light, wherein the vehicle light comprises a plurality of independently controllable projection units, and the plurality of independently controllable projection units are configured to control a projection direction, so that the second navigation identifier is displayed on the ground in front of the vehicle.

11. The method according to claim 10, wherein the vehicle light comprises a digital projection light, and the projection unit is a micro reflector; or the vehicle light comprises a light emitting diode LED light, and the projection unit is an LED bead.

12. The method according to claim 2, wherein the preset condition comprises:
one or more of the following: an effect of the second navigation identifier displayed through the second apparatus does not reach a preset effect, ambient luminance is greater than or equal to operating luminance of the second apparatus, a to-be-displayed ground area of the second navigation identifier is shielded, or a to-be-displayed ground area of the second navigation identifier exceeds a ground display area of the second apparatus.

13. The method according to claim 12, wherein the method further comprises:
when a first distance between a shield in front of the vehicle and the second apparatus is less than a second distance between the to-be-displayed ground area of the second navigation identifier and the second apparatus, determining that the to-be-displayed ground area of the second navigation identifier is shielded.

14. A navigation apparatus, comprising:
an obtaining module, configured to obtain navigation information of a vehicle; and
a processing module, configured to display a first navigation identifier in front of the vehicle through a first apparatus, and further configured to display a second navigation identifier on the ground in front of the vehicle through a second apparatus, wherein the first navigation identifier and the second navigation identifier are used to jointly display the navigation information.

15. The apparatus according to claim 14, wherein the processing module is further configured to:
when a preset condition is met, display the second navigation identifier in front of the vehicle through the first apparatus.

16. The apparatus according to claim 14 or 15, wherein the processing module is configured to display the first navigation identifier in a non-ground area in front of the vehicle through the first apparatus.

17. The apparatus according to any one of claims 14 to 16, wherein the first navigation identifier and the second navigation identifier are displayed synchronously.

18. The apparatus according to any one of claims 14 to 17, wherein the navigation information that is jointly displayed by using the first navigation identifier and the second navigation identifier is presented in a three-dimensional effect.

19. The apparatus according to claim 18, wherein the first navigation identifier comprises a first route guide identifier, and the second navigation identifier comprises a ground projection identifier corresponding to the first route guide identifier.

20. The apparatus according to any one of claims 14 to 17, wherein the first navigation identifier comprises a second route guide identifier, and the second navigation identifier comprises a third route guide identifier.

21. The apparatus according to claim 20, wherein the second route guide identifier comprises a route guide arrow, and the third route guide identifier comprises a route guide area.

22. The apparatus according to claim 20, wherein the second route guide identifier comprises a first part of a target route guide identifier, and the third route guide identifier comprises a second part of the target route guide identifier.

23. The apparatus according to any one of claims 14 to 22, wherein the first apparatus comprises a head up display HUD apparatus, and the second apparatus comprises a vehicle light, wherein the vehicle light comprises a plurality of independently controllable projection units, and the plurality of independently controllable projection units are configured to control a projection direction, so that the second navigation identifier is displayed on the ground in front of the vehicle.

24. The apparatus according to claim 23, wherein the vehicle light comprises a digital projection light, and the projection unit is a micro reflector; or the vehicle light comprises a light emitting diode LED light, and the projection unit is an LED bead.

25. The apparatus according to claim 15, wherein the preset condition comprises:
one or more of the following: an effect of the second navigation identifier displayed through the second apparatus does not reach a preset effect, ambient luminance is greater than or equal to operating luminance of the second apparatus, a to-be-displayed ground area of the second navigation identifier is shielded, or a to-be-displayed ground area of the second navigation identifier exceeds a ground display area of the second apparatus.

26. The apparatus according to claim 25, wherein the processing module is further configured to:
when a first distance between a shield in front of the vehicle and the second apparatus is less than a second distance between the to-be-displayed ground area of the second navigation identifier and the second apparatus, determine that the to-be-displayed ground area of the second navigation identifier is shielded.

27. A navigation apparatus, comprising at least one processor, wherein the at least one processor is configured to: be coupled to a memory, and read and execute instructions in the memory, to implement the navigation method according to any one of claims 1 to 13.

28. A navigation system, comprising a first apparatus, a second apparatus, and a processing apparatus, wherein the processing apparatus is configured to perform the navigation method according to any one of claims 1 to 13, to jointly display the navigation information through the first apparatus and the second apparatus.

29. A computer-readable storage medium, wherein the computer-readable storage medium stores computer instructions, and when the computer instructions are run on a computer, the navigation method according to any one of claims 1 to 13 is implemented.

30. A vehicle, comprising a module configured to perform the navigation method according to any one of claims 1 to 13.
